# EUROPÄISCHE PATENTSCHRIFT

(11) **EP 2 155 467 B1**
(45) Veröffentlichungstag und Bekanntmachung des Hinweises auf die Patenterteilung: **26.04.2017**
(21) Anmeldenummer: 08758141.9
(22) Anmeldetag: 29.05.2008
(51) Int. Cl.: B29C 47/90

(54) **VORRICHTUNG ZUM HERSTELLEN VON RUNDEN ODER OVALEN KUNSTSTOFFROHREN**
APPARATUS FOR THE PRODUCTION OF ROUND OR OVAL PLASTIC TUBES
APPAREIL DE PRODUCTION DE TUBES RONDS OU OVALES EN MATIÈRE PLASTIQUE

(30) Priorität: 06.06.2007 DE 102007026309
(43) Veröffentlichungstag der Anmeldung: 24.02.2010
(73) Patentinhaber: battenfeld-cincinnati Germany GmbH, 32547 Bad Oeynhausen (DE)
(72) Erfinder: BAUMANN, Christian, 77966 Kappel-Grafenhausen (DE); BAUMANN, Albrecht, 79336 Herbolzheim (DE)
(86) Internationale Anmeldenummer: PCT/DE2008/000901
(87) Internationale Veröffentlichungsnummer: WO 2008/148372

(56) Entgegenhaltungen:
- EP-A- 0 186 978
- EP-A- 1 157 805
- EP-A- 1 652 651
- WO-A-01/56917
- DE-A1- 2 244 294
- US-A- 2 605 582
- US-A- 3 904 334
- US-A1- 2006 078 641

## Beschreibung

Die Erfindung betrifft eine Vorrichtung zum Herstellen von runden oder ovalen Kunststoffrohren nach dem Oberbegriff des Anspruchs 1 und gemäß EP 1 157 805 A1.

Kunststoffrohre werden in einem Extruder gespritzt. Das Kunststoffrohr, welches den Extruder verlässt, ist noch weich, so dass es einer Kühleinrichtung zugeführt werden muss. Hier ist es bekannt, das noch weiche Kunststoffrohr durch ein äußeres Mantelrohr mit einer Mantelkühlung zu führen, so dass das Kunststoffrohr nach Verlassen dieses Mantelrohres erstarrt ist und seine Form beibehält. - Der Nachteil bei diesen Vorrichtungen besteht darin, dass bei einem anderen Kunststoffrohrdurchmesser die gesamte Kalibriereinrichtung ausgewechselt werden muss, was mit einem erheblichen technischen Aufwand verbunden ist. Weiterhin ist die Kühlleistung durch den Wassermantel relativ gering.

Als Weiterentwicklung hierzu ist es zum Einstellen unterschiedlicher Durchmesser bekannt, radial verstellbare Lamellen vorzusehen. Diese sind jedoch mit mehreren Nachteilen behaftet. Zunächst erfordert zwar jede Hubbewegung einer Lamelle nur eine geringe Kraft, doch die Summe aller Lamellen erfordert eine große Gesamtkraft. Weiterhin wird das Kunststoffrohr auf der Oberfläche nie ganz eben, da die Lamellen auf der Oberfläche Riefen hinterlassen. Schließlich ist die notwendige Kühlung nicht optimal, da dem System nur schwer Wasser zugeführt werden kann.

Davon ausgehend liegt der Erfindung die **Aufgabe** zugrunde, eine Vorrichtung zum Herstellen von runden oder ovalen Kunststoffrohren mit einer verbesserten Kalibriereinrichtung zu schaffen.

Die technische **Lösung** ist gekennzeichnet durch die Merkmale im Kennzeichen des Anspruchs 1.

Die Grundidee der erfindungsgemäßen Vorrichtung zum Herstellen von runden oder ovalen Kunststoffrohren besteht darin, als Kalibriereinrichtung einen konusförmigen Trichter zu verwenden. Dieser hat im Vergleich zu den bekannten Kalibriereinrichtungen etliche Vorteile, wie noch auszuführen sein wird. Dabei wird das zu kalibrierende Kunststoffrohr von hinten, d. h. von der Seite mit dem großen Durchmesser her dem Trichter koaxial zugeführt, so dass es dann in den Bereich des kleinen Durchmessers des Trichters gelangt. Die Umfangskante dieses kleinen Durchmessers liegt dabei an der Mantelfläche des Kunstoffrohres an. Die Öffnungen des Trichters können dabei hinsichtlich ihrer Querschnittsform rund, aber auch
oval sein. Schließlich hat die Verwendung eines konusförmigen Trichters den Vorteil, dass eine optimale Wasserzuführung zum Kühlen des noch weichen Kunststoffrohres möglich ist.

Eine bevorzugte Weiterbildung schlägt Anspruch 2 hinsichtlich der Herstellung und Ausbildung des Trichters vor. Die Grundidee besteht darin, dass der Trichter durch einen Kreisring gebildet ist, welcher einen Kreisausschnitt (Sektor) aufweist. Beispielsweise kann dieser Kreisring halbkreisförmig ausgebildet sein. Die Grundidee besteht darin, diesen Kreisring zu einem konusförmigen Trichter zu rollen. Durch die Eigenstabilität des entsprechenden flexiblen Materials des Kreisringes wird dadurch auf einfache Weise eine runde Konusform des Trichters geschaffen. Durch entsprechende Abstützungen ist es aber auch möglich, eine ovale Konusform zu schaffen.

Die Weiterbildung gemäß Anspruch 3 hat den Vorteil, dass der Trichter im Bereich des kleinen Durchmessers, also im Austrittsbereich des Kunststoffrohres aus dem Trichter eine exakt kreisrunde Linie beschreibt, indem die konkav abgerundete Innenkreislinie an der korrespondierenden Gegenkante des Kreisringes anliegt.

Eine weitere bevorzugte Weiterbildung schlägt Anspruch 4 vor. Die Grundidee besteht darin, dass durch das spitze Zulaufen der Innenkreislinie des Kreisringes kein Durchmessersprung entsteht, sondern dass der Solldurchmesser im Austrittsbereich des Kunststoffrohres exakt eingehalten wird. Dadurch entstehen auf dem Kunststoffrohr keine Riefen.

Eine weiter bevorzugte Weiterbildung schlägt gemäß Anspruch 5 vor, dass der Durchmesser des Trichters veränderbar ist. Dies hat den Vorteil, dass zum Herstellen eines Kunststoffrohres mit einem anderen Durchmesser nicht die gesamte Kalibriereinrichtung ausgewechselt werden muss, sondern dass lediglich der Durchmesser des Trichters verändert wird, um so auf schnelle Weise eine Anpassung an unterschiedliche Durchmesser vornehmen zu können.

Konstruktiv gelöst wird dies gemäß Anspruch 6 dadurch, dass der Rollgrad des Kreisringes veränderbar ist. Indem einfach der Trichter stärker oder schwächer zusammengerollt wird, sind auf technisch einfache Weise rasch unterschiedliche Durchmesser einstellbar. Es ist lediglich erforderlich, dass der Kreisring aus einem flexiblen Flächenelement aus Metall oder Kunststoff besteht, so dass er beim Zusammenrollen oder Auf rollen die entsprechende Bewegung mitmacht.

Eine erste Variante zum Verändern des Rollgrades des Kreisringes schlägt Anspruch 7 vor. Die Grundidee zum Verstellen des Trichters besteht darin, dass der Mantel des Trichters von
einem koaxialen Ring umgeben ist, wobei dieser Ring an der Mantelfläche anliegt. Indem dieser koaxiale Ring bezüglich des feststehenden Trichters axial bewegt wird, wird die Öffnung des Konus größer oder kleiner. Wird somit der Ring in Richtung des kleineren Durchmessers des Konus bewegt, vergrößert sich der Durchmesser, während in umgekehrter Richtung sich der Durchmesser des Trichters verkleinert. Zur konstruktiven Lösung weist der Kreisring vorzugsweise an seiner einen Radialkante einen abstehenden Steg oder dgl. auf, welcher als Mitnehmer fungiert. In diesen Mitnehmer greift der Ring formschlüssig ein. Durch eine Axialverstellung des Ringes erfährt er eine zusätzliche Drehbewegung, indem der Mitnehmer den umgebenden Ring synchron mitnimmt. Die Axialverschiebung des Ringes bezüglich des feststehenden Trichters kann beispielsweise mittels eines Schraubengewindes erfolgen.

Eine zweite Variante zum Verändern des Rollgrades des Kreisringes schlägt Anspruch 8 vor. Die Grundidee besteht darin, die Verstelleinrichtung nicht an der Mantelfläche des Trichters angreifen zu lassen, sondern die Verstelleinrichtung im Bereich der Umfangskante des größeren Durchmessers des Trichters angreifen zu lassen. Die Verstelleinrichtung steht dabei in Eingriff mit diesem kreisförmigen Umfangsrand. Durch eine Bewegung der Verstelleinrichtung radial nach innen oder nach außen wird dieser Umfangsrand mitgenommen, so dass dadurch der Durchmesser des Trichters entsprechend vergrößert oder verkleinert wird. Dies ändert dann proportional den Durchmesser des kleinen Durchmessers des Trichters, wobei der Öffnungswinkel des Konus immer gleich bleibt.

Eine weitere Weiterbildung schlägt gemäß Anspruch 9 vor, dass mehrere Trichter koaxial hintereinander angeordnet sind. Dadurch wird eine stufenweise Kalibrierung erzeugt. Der Vorteil ist, dass auch durch die Anordnung mehrerer Trichter hintereinander eine Wasserzuführung ohne weiteres möglich ist.

Die Weiterbildung gemäß Anspruch 10 hat den Vorteil, dass durch das Wasserbad eine höhere Kühlleistung erreicht wird, so dass damit ein schnellerer Vorwärtstransport des Kunststoffrohres möglich ist.

Schließlich hat die Weiterbildung gemäß Anspruch 11 den Vorteil, dass durch die kontinuierliche Messung des Durchmessers des die Kalibriervorrichtung verlassenden Kunststoffrohres direkt Einfluss auf eine eventuelle Durchmesserveränderung des Trichters genommen werden kann.

Ausführungsbeispiele einer erfindungsgemäßen Vorrichtung zum Herstellen von runden oder ovalen Kunststoffrohren werden nachfolgend anhand der Zeichnungen beschrieben. In diesen zeigt:
- Fig. 1: eine Ansicht von der Innenseite her des Kreisringes im auseinandergelegten, flachen Zustand;
- Fig. 2: eine Seitenansicht des Kreisringes der Darstellung gemäß Fig. 1 von links;
- Fig. 3: einen Schnitt entlang der Linie A-A in Fig. 1 (mit Detailvergrößerung);
- Fig. 4: einen Schnitt entlang der Linie B-B in Fig. 1 in Fig. 1 (mit Detailvergrößerung);

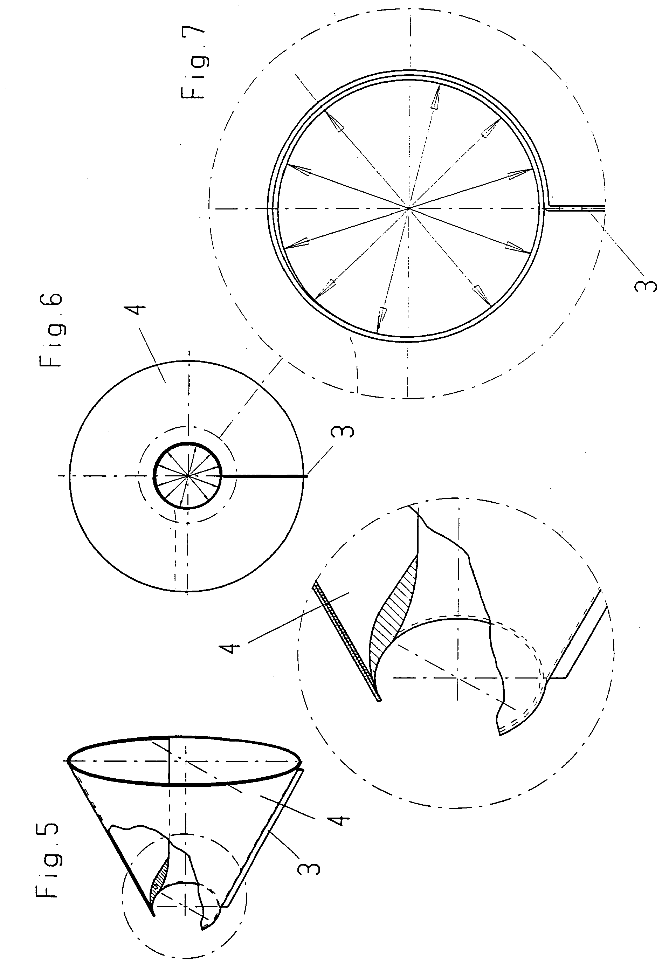

- Fig. 5: der Kreisring in Fig. 1 im zusammengerollten Zustand zur Schaffung eines Trichters in Fig. 1 (mit Detailvergrößerung);
- Fig. 6: eine Ansicht des Trichters in Fig. 5 von links;
- Fig. 7: eine Ansicht des Trichters in Fig. 5 von rechts;
- Fig. 8: eine Ansicht des Trichters mit Verstelleinrichtung mit eingestelltem größeren Durchmesser entlang der Schnittlinie A-A in Fig. 9;
- Fig. 9: eine Stirnansicht des Trichters in Fig. 8 von rechts;
- Fig. 10: eine Stirnansicht des Trichters in Fig. 8 von links;
- Fig. 11: eine Detailvergrößerung aus Fig. 10;
- Fig. 12 bis 15: Darstellungen entsprechend denen in den Fig. 8 bis 11 jedoch mit eingestelltem kleineren Durchmesser;
- Fig. 16: eine Darstellung entsprechend der in Fig. 9, jedoch mit großem ovalen Querschnitt;
- Fig. 17: die Darstellung gemäß Fig. 16, jedoch mit kleinem ovalen Querschnitt;
- Fig. 18: eine Darstellung entsprechend der in Fig. 8, jedoch mit einer modifizierten Verstelleinrichtung zum Verändern des Durchmessers des Trichters (mit Detailvergrößerung);
- Fig. 19: eine Stirnansicht des Trichters in Fig. 18 von rechts;
- Fig. 20: die Gesamtvorrichtung mit mehreren hintereinander angeordneten Trichtern;
- Fig. 21 bis 23: Darstellungen entsprechend denen in Fig. 18 bis 20, jedoch mit kleinem Durchmesser;
- Fig. 24: eine Darstellung entsprechend der in Fig. 20 mit nachgeschaltetem Wasserbad mit großem Rohrdurchmesser;
- Fig. 25: eine Darstellung entsprechend der in Fig. 24 jedoch mit kleinem Rohrdurchmesser.

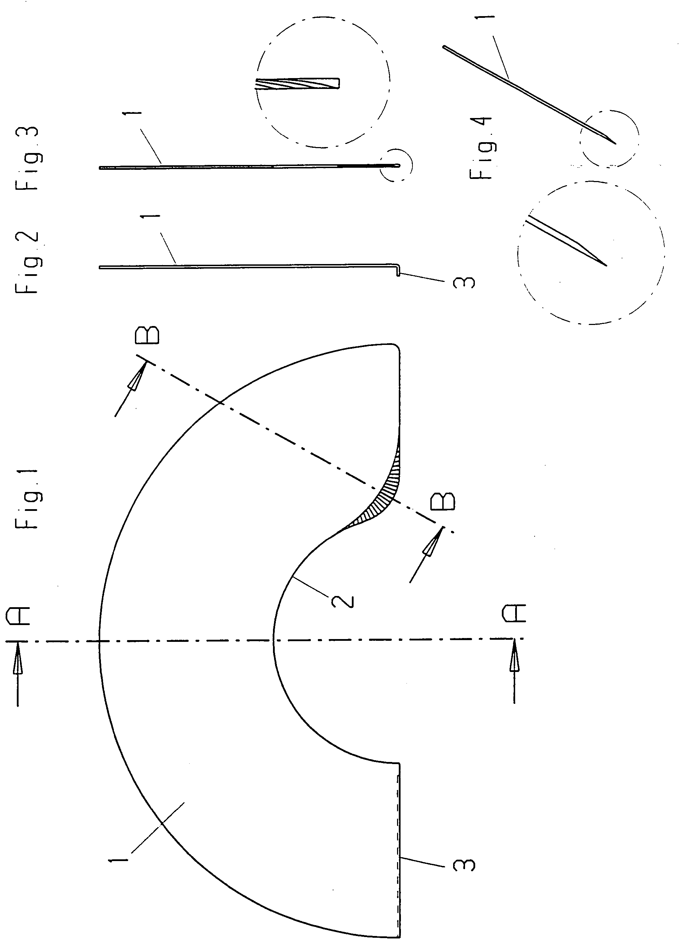

Fig. 1 zeigt einen Kreisring 1 mit einem Kreisausschnitt (Sektor) in Form eines Halbkreises. Dabei zeigt Fig. 1 die Innenseite dieses Kreisringes. Die Außenseite des Kreisringes 1 ist mit einer Gleitmittelbeschichtung versehen.

Die Innenkreislinie 2 des Kreisrings 1 weist in dem Bereich, wo diese Innenkreislinie 2 in den Radialbereich des Kreisausschnittes übergeht, eine konvexe Abrundung (schraffierter Bereich) auf. Außerdem läuft in diesem Bereich entsprechend der Schnittdarstellung B-B in Fig. 4 das Material des Kreisringes 1 spitz zu.

Auf der anderen Seite des Kreisringes 1 weist die radiale Begrenzungskante des Kreisausschnittes einen senkrecht abstehenden Mitnehmer 3 in Form einer Leiste auf.

Der Kreisring 1 ist zu einem konusförmigen Trichter 4 mit einer großen Öffnung auf der einen Seite und einer kleineren Öffnung auf der anderen Seite zusammengerollt. Dabei liegt die konvex abgerundete Innenkreislinie 2 des Kreisrings 1 auf einem anderen Bereich dieser Innenkreislinie 2 auf. Indem das Material des Kreisringes 1 im Bereich dieser Abflachung
spitz zuläuft (Fig. 4), wird eine exakt kreisrunde Form des Trichters 4 im Bereich der kleineren Öffnung geschaffen.

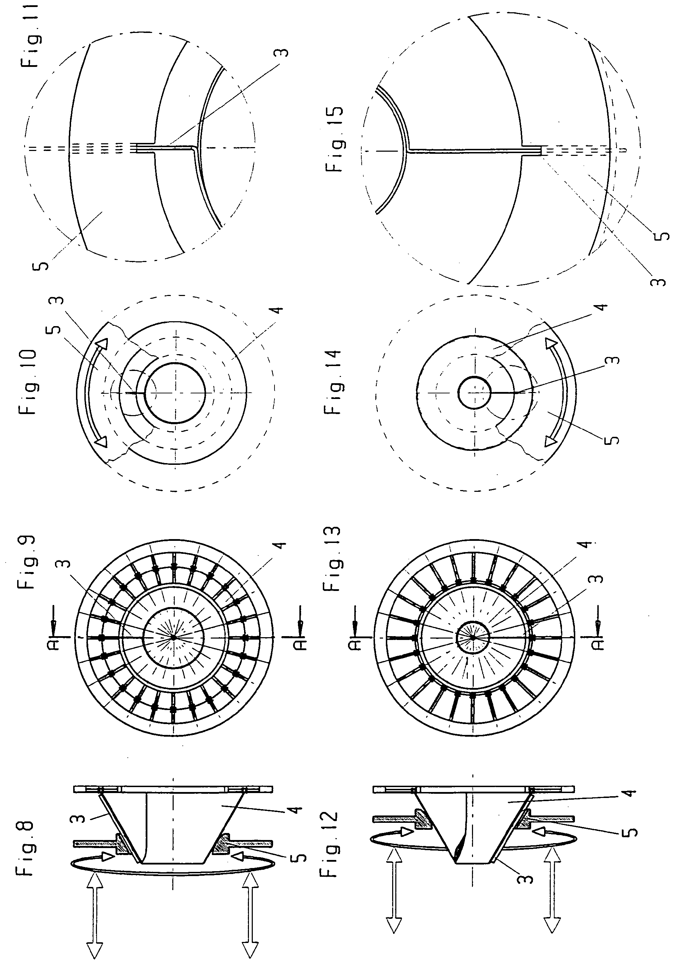

Dem Trichter 4 ist eine Verstelleinrichtung zum Ändern des Durchmessers des Trichters 4 zugeordnet. Diese Verstelleinrichtung weist einen Ring 5 auf. Dieser nimmt mit einer korrespondierenden Nut den Mitnehmer 3 des Kreisringes 1 auf. Durch eine koaxiale Verschiebung dieses Ringes 5 bezüglich des feststehenden Trichters 4 sowie durch die freie Drehbarkeit des Ringes 5 wird der Grad des Aufrollzustandes des Kreisringes 1 verändert und damit der Durchmesser der (kleineren) Öffnung des Trichters 4 verändert. Dabei ist in den Fig. 8 bis 11 der Zustand mit einem größeren Durchmesser und die Darstellung der Fig. 12 bis 15 der Zustand mit einem kleineren Durchmesser dargestellt.

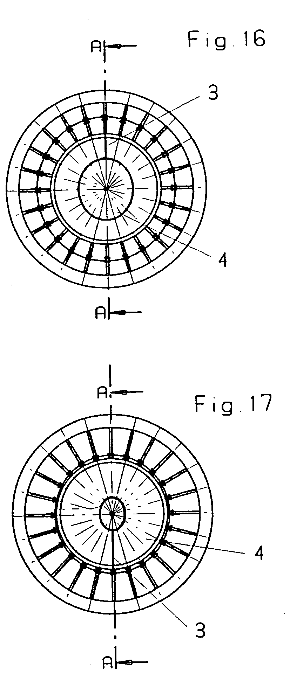

Fig. 16 und 17 zeigen, dass mit dem Trichter 4 nicht nur runde Öffnungen, sondern auch ovale Öffnungen geschaffen werden können. Die Funktionsweise im Zusammenwirken mit dem Ring 5 ist dabei entsprechend.

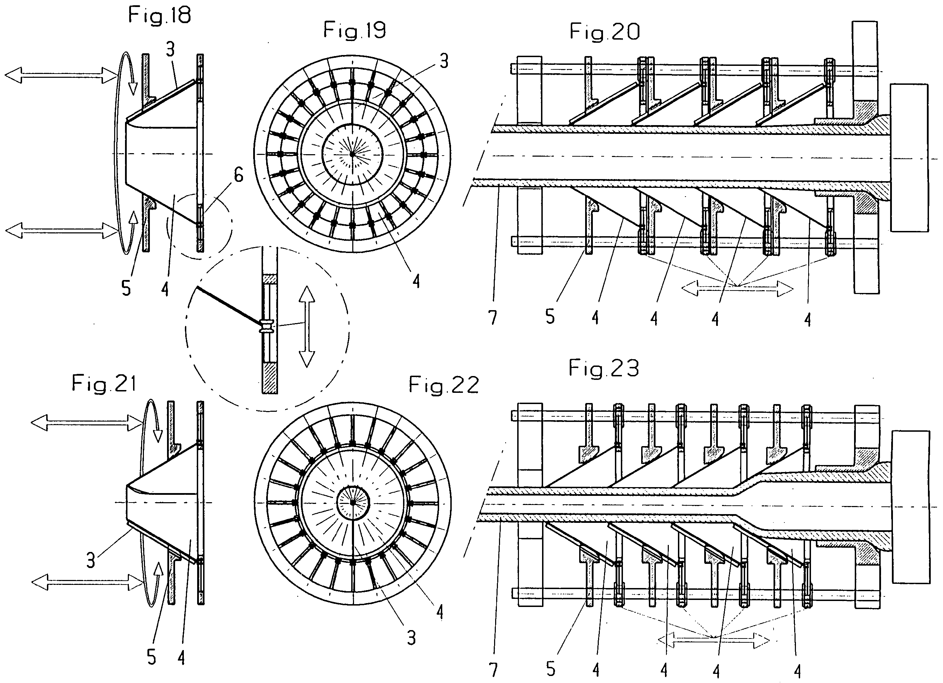

Die Darstellungen gemäß Fig. 18 und 19 (großer Durchmesser) sowie die Darstellungen gemäß Fig. 21 und 22 (kleiner Durchmesser) zeigen eine etwas anders geartete Verstelleinrichtung 6. Hier besteht dar Grundprinzip darin, dass die runde Umfangskante des Trichters 4 in einer Radialführung geführt ist. Wird beispielsweise in Fig. 18 diese Verstelleinrichtung 6 nach oben bewegt, so verringert sich der Durchmesser. Umgekehrt, wird die Radialführung der Verstelleinrichtung 6 nach unten bewegt, vergrößert sich der Durchmesser.

Die Funktionsweise ist wie folgt:
In Fig. 20 ist dargestellt, wie mehrere Trichter 4 hintereinander angeordnet sind. Diesen Trichtern 4 wird ein noch weiches, extrudiertes Kunststoffrohr 7 (in der Zeichnung von rechts) zugeführt. Durch die Trichter 4 erfolgt eine Kalibrierung bei einem Kreis auf einen ganz bestimmten Durchmesser bzw. bei einem Oval auf eine ganz bestimmte Ovalität.

Durch Verstellen der Öffnungen der Trichter 4 kann der Durchmesser variiert werden. In Fig. 23 ist der Durchmesser verkleinert worden.

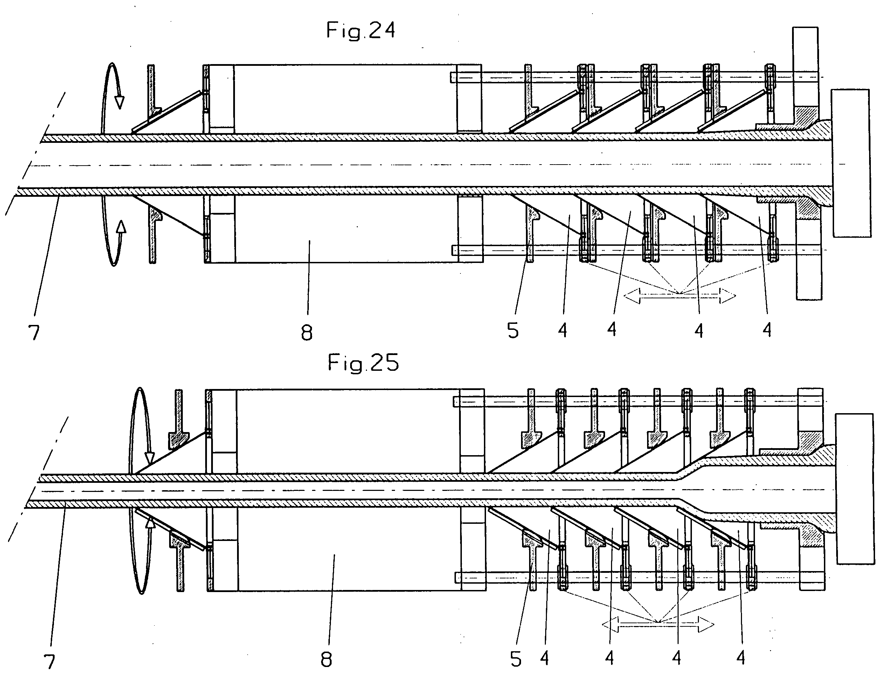

Die Fig. 24 und 25 zeigen noch eine modifizierte Ausführungsform dahingehend, dass den Trichtern 4 ein Wasserbad 8 nachgeordnet ist, durch welches das Kunststoffrohr 7 zur Abkühlung geführt wird.

Besonders ist noch, dass der in der Zeichnung dargestellte Trichter links vom Wasserbad 8 für eine luftdichte Abdichtung des Systems sorgt, wenn sich das System im Unterdruck befindet.

### Bezugszeichenliste:

- 1: Kreisring
- 2: Innenkreislinie
- 3: Mitnehmer
- 4: Trichter
- 5: Ring
- 6: Verstelleinrichtung
- 7: Kunststoffrohr
- 8: Wasserbad

## Patentansprüche

1. Vorrichtung zum Herstellen von runden oder ovalen Kunststoffrohren (7), mit einer mit einer durch einen konusförmigen Trichter (4) mit veränderbarem Durchmesser gebildeten Kalibriereinrichtung,
wobei das Kunststoffrohr (7) nach dem Extrudieren durch die Öffnung des Trichters (4) mit dem geringeren Durchmesser koaxial hindurchführbar ist und welche dabei an der Außenmantelfläche des Kunststoffrohres (7) anliegt,
**dadurch gekennzeichnet, dass**
der Trichter (4) durch einen, einen Kreisauschnitt aufweisenden Kreisring (1) gebildet ist,
welcher zu dem konusförmigen Trichter (4) gerollt ist, und dass der Rollgrad des Kreisringes (1) zu dem Trichter (4) veränderbar ist.

2. Vorrichtung nach dem vorhergehenden Anspruch, **dadurch gekennzeichnet, dass** derjenige Bereich einer Innenkreislinie (2) des Kreisringes (1), welcher im zum Trichter (4) gerollten Zustand an einem anderen Bereich dieser Innenkreislinie (2) anliegt, in der Linienkontur konvex abgerundet ist.

3. Vorrichtung nach einem der vorhergehenden Ansprüche, **dadurch gekennzeichnet, dass** derjenige Bereich der Innenkreislinie (2) des Kreisringes (1), welcher im zum Trichter (4) gerollten Zustand an einem anderen Bereich dieser Innenkreislinie (2) anliegt, im Radialschnitt zur Innenkreislinie (2) hin spitz zuläuft.

4. Vorrichtung nach einem der Ansprüche 1 bis 3, **dadurch gekennzeichnet, dass** der den Mantel des Trichters (4) überlappende Bereich des Kreisrings (1) einen Mitnehmer (3) aufweist und dass ein zu dem Trichter (4) konzentrischer, die Mantelfläche des Trichters (4) ringförmig umgebender sowie im Eingriff mit dem Mitnehmer (3) stehender Ring (5) vorgesehen ist, welcher axial verschiebbar sowie frei drehbar ist.

5. Vorrichtung nach einem der Ansprüche 1 bis 3, **dadurch gekennzeichnet, dass** an dem Trichter (4) an dessen Umfangskante mit dem größeren Durchmesser eine senkrecht zur Achse des Trichters (4) verstellbare Verstelleinrichtung (6) angreift.

6. Vorrichtung nach einem der vorhergehenden Ansprüche, **dadurch gekennzeichnet, dass** mehrere Trichter (4) koaxial hintereinander angeordnet sind.

7. Vorrichtung nach einem der vorhergehenden Ansprüche, **dadurch gekennzeichnet, dass** sich der Trichter (4) in einem Wasserbad (8) befindet oder dass ein Wasserbad (8) nachgeordnet ist.

8. Vorrichtung nach einem der vorhergehenden Ansprüche, **dadurch gekennzeichnet, dass** dem aus dem Trichter (4) austretenden Kunststoffrohr (7) ein Sensor zugeordnet ist, welcher den Durchmesser des kalibrierten Kunststoffrohres (7) misst.

## Claims

1. Apparatus for producing round or oval plastic tubes (7), comprising a calibrating device formed by a conical funnel (4) with adjustable diameter,
it being possible for the plastic tube (7) to be passed coaxially through the smaller opening of the funnel after extrusion, the device lying against the outer lateral surface of the plastic tube (7),
**characterized in that**
the funnel (4) is formed by a circular ring (1) featuring a circle segment,
the circular ring being rolled into the conical funnel (4), the degree of rolling of the circular ring (1) into the funnel (4) being adjustable.

2. Apparatus according to the preceding claim, **characterized in that** the area of an inner circle line (2) of the circular ring (1) that, the circular ring (1) being rolled into the funnel (4), lies against another area of that inner circle line (2) is convexly rounded in its contour.

3. Apparatus according to one of the preceding claims, **characterized in that** the area of an inner circle line (2) of the circular ring (1) that, the circular ring (1) being rolled into the funnel (4), lies against another area of that inner circle line (2) tapers towards the inner circle line (2) in radial section.

4. Apparatus according to one of the claims 1 to 3, **characterized in that** the area of the circular ring (1) overlapping the lateral surface of the funnel (4) features a driver (3) and that a ring (5) is provided, the ring being concentric to the funnel (4), circularly enclosing the lateral surface of the funnel (4), engaged with the driver, axially adjustable and freely rotatable.

5. Apparatus according to one of the claims 1 to 3, **characterized in that** an adjuster (6) displaceable vertically to the axis of the funnel (4) engages the peripheral edge with the largest diameter of the funnel (4).

6. Apparatus according to one of the preceding claims, **characterized in that** several funnels (4) are coaxially arranged one behind the other.

7. Apparatus according to one of the preceding claims, **characterized in that** the funnel (4) is located in a water bath (8), or that a water bath (8) is arranged downstream.

8. Apparatus according to one of the preceding claims, **characterized in that** a sensor is assigned to the plastic tube (7) emerging from the funnel (8) to measure the diameter of the calibrated plastic tube (7).

## Revendications

1. Appareil pour la production de tubes en plastique rondes ou ovales (7), comprenant un dispositif de calibration formé d'un entonnoir conique (4) à diamètre modifiable,
le tube en plastique pouvant être passé de manière coaxiale à travers l'ouverture de l'entonnoir (4) de diamètre inférieur, ledit dispositif étant en contact avec la surface extérieure du tube en plastique (7),
**ledit dispositif caractérisé en ce que**
l'entonnoir (4) est formé d'un anneau circulaire (1) présentant un arc de cercle,
l'anneau circulaire (1) étant roulé en entonnoir conique (4) et le degré de rotation de l'anneau circulaire (1) en entonnoir étant modifiable.

2. Dispositif selon la revendication précédente, **caractérisé en ce que** la partie d'une ligne circulaire intérieure (2) de l'anneau circulaire (1) qui, l'anneau circulaire (1) étant roulé en entonnoir (4), touche à une autre section de la dite ligne circulaire intérieure (2) montre un contour arrondi de manière convexe.

3. Dispositif selon l'une quelconque des revendications précédentes, **caractérisé en ce que** la section de la ligne circulaire intérieure (2) de l'anneau circulaire (1) qui, l'anneau circulaire (1) étant roulé en entonnoir (4), touche à une autre section de la dite ligne circulaire intérieure (2), vue en section radiale est pointue vers la ligne circulaire intérieure (2).

4. Dispositif selon l'une quelconque des revendications 1-3, **caractérisé en ce que** la section de l'anneau circulaire (1) chevauchant la surface extérieure de l'entonnoir (4) présente un entraîneur (3) et qu'un anneau (5) est prévu, concentrique avec l'entonnoir (4), entourant la surface extérieure de l'entonnoir (4) de manière circulaire et en prise avec l'entraîneur, ledit anneau (5) étant axialement déplaçable et librement mobile en rotation.

5. Dispositif selon l'une quelconque des revendications 1-3, **caractérisé en ce qu'**un système de déplacement qui peut être déplacé verticalement à l'axe de l'entonnoir (4) s'engage au bord périphérique de plus grand diamètre de l'entonnoir (4).

6. Dispositif selon l'une quelconque des revendications précédentes, **caractérisé en ce que** plusieurs entonnoirs (4) sont disposés les uns à la suite des autres de manière coaxiale.

7. Dispositif selon l'une quelconque des revendications précédentes, **caractérisé en ce que** l'entonnoir se trouve dans un bain d'eau (8) ou qu'un bain d'eau (8) est situé en aval.

8. Dispositif selon l'une quelconque des revendications précédentes, **caractérisé en ce qu'**un capteur est associé au tube en plastique (7) sortant de l'entonnoir (4), ledit capteur mesurant le diamètre du tube en plastique (7) calibré.
